# EUROPEAN PATENT APPLICATION

(11) **EP 2 889 172 A1**
(43) Date of publication of application: **01.07.2015**
(21) Application number: 13831564.3
(22) Date of filing: 23.08.2013
(51) Int. Cl.: B60K 13/04, F01N 3/035

(54) **FIXING STRUCTURE OF EXHAUST GAS AFTER-TREATMENT DEVICE IN AGRICULTURAL OPERATION VEHICLE**

(30) Priority: 23.08.2012 KR 20120092508
(71) Applicant: Daedong Industrial co. Ltd., Dalsung-Gun, Daegu 635-806 (KR)
(72) Inventor: SHIN, Yong, Changnyeong-gun Gyeongsangnam-do 635-806 (KR); KIM, Jeong Gu, Changnyeong-gun Gyeongsangnam-do 635-806 (KR)
(74) Representative: Caspary, Karsten
(86) International application number: PCT/KR2013/007585
(87) International publication number: WO 2014/030968

(57) **Abstract**

The present invention relates to a fixing structure of an exhaust gas after-treatment device in an agricultural working vehicle, which makes it easy to attach or detach the exhaust gas after-treatment device to or from an engine according to requirements, and can improve the usability in the internal space of the engine room. To this end, the present invention provides a structure for fixing an exhaust gas after-treatment device purifying the exhaust gas of an engine to the engine in an agricultural working vehicle, characterized in that the exhaust gas after-treatment device is arranged on the top of the flywheel housing of the engine in the direction perpendicular to the longitudinal direction of the engine, and is fixed simultaneously to both the cylinder block of the engine and the flywheel housing by means of a fixing member.

## Description

### [Cross-reference to related applications]

This application claims priority to Korean Patent Application No. 10-2012-0092508, filed on Aug. 23, 2012. The contents of the above applications are incorporated herein in by reference in their entireties.

### [Technical Field]

The present invention relates to a structure for detachably fixing an exhaust gas after-treatment device to an engine of an agricultural working vehicle.

### [Background Art]

Most of agricultural working vehicles like tractors obtain driving power and working power from diesel engines.

The diesel engine is a reciprocating internal combustion engine operated by compression and ignition of diesel or heavy oil. Accordingly, the diesel engine has more excellent durability than a gasoline engine, but it discharges lots of nitrogen oxides (NOₓ) and particulate matters (PM), thus giving bad influences on atmospheric contamination.

Accordingly, the regulation of the emission of the exhaust gas in the diesel engine has been strictly executed in most of countries, and so as to satisfy environmental regulation like Tier 4 emission standards conducted in developed countries like Europe or North America, especially, fuel injection timing should be delayed technologically, the concentration of nitrogen oxides should be reduced through an exhaust gas recycling device, the combustion performance of the engine should be improved to reduce the particulate matters.

So as to minimize exhaust gas contaminants and to preserve atmospheric environments, an exhaust gas after-treatment device for a diesel engine has been widely adopted and used in this field, wherein a diesel oxidation catalyst (hereinafter, referred to as 'DOC') and a diesel particulate filter (hereinafter, referred to as 'DPF') are coupled to each other (See Korean Patent Laid-Open Application No. 2012-0052510).

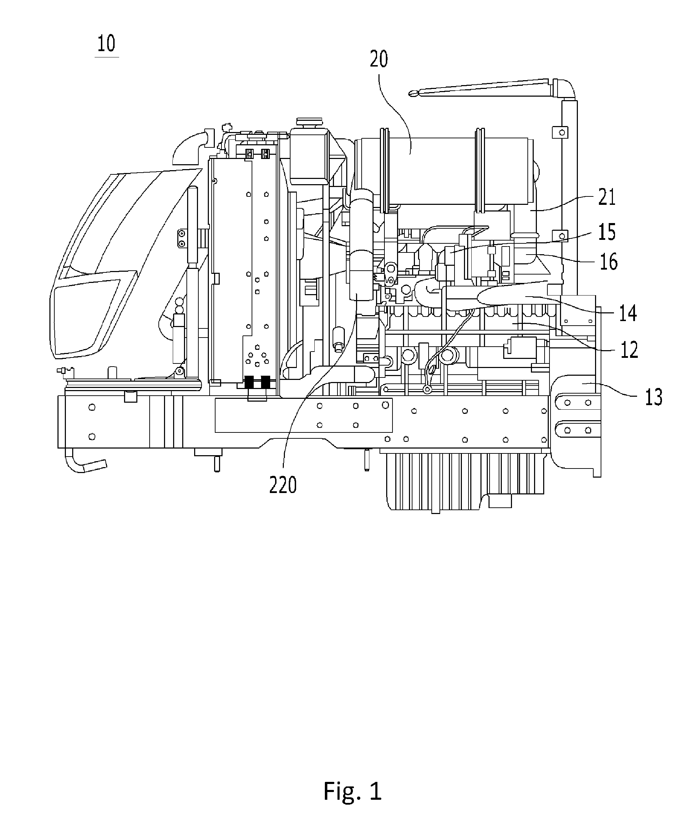

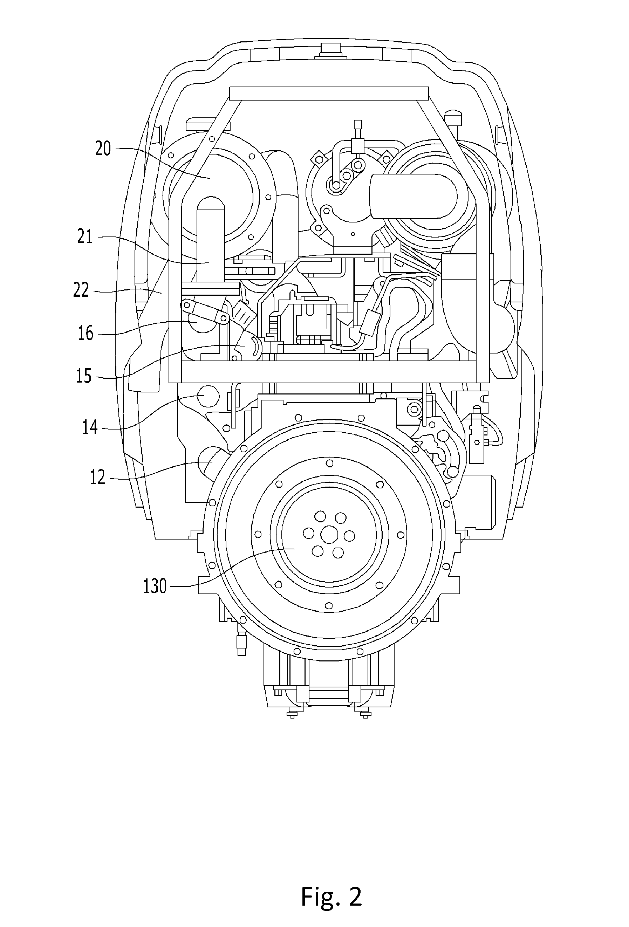

FIG.1 is a front view showing the internal configuration of an engine room to which a conventional exhaust gas after-treatment device of an agricultural working vehicle is fixed, and FIG.2 is a side view showing the interior of the engine room of FIG.1 seen at the rear side of the vehicle.

As shown in FIGS.1 and 2, an engine room 10 of a tractor as an agricultural working vehicle is configured to protect an engine 12 by means of a bonnet open upward, and the power generated through the engine 12 is transmitted to a transmission (not shown) through a flywheel housing 13 located at the rear side of the engine 12. An exhaust gas after-treatment device 20 purifying the exhaust gas generated from the engine 12 is attached to the engine room 10. Further, the exhaust gas after-treatment device 20 has an exhaust gas inlet 210 formed on one side thereof in such a manner as to be connected to a turbocharger 15 of the engine 12 and a purified gas outlet 22 formed on the other side thereof in such a manner as to be connected to a muffler pipe (not shown). The exhaust gas after-treatment device 20 is disposed over an exhaust manifold 14 in parallel to the engine 12 along the longitudinal direction of the engine 12, and the turbocharger 15 is located under the exhaust gas inlet 21. The exhaust gas inlet 21 and the turbocharger 15 are coupled to each other by means of a flange pipe 16.

Under the above-mentioned configuration, the exhaust gas is discharged to the exhaust manifold 14 when the engine 12 is driven and introduced into the turbocharger 15 disposed on the exhaust manifold 14, thus driving a turbine. After that, the exhaust gas is supplied to the exhaust gas inlet 21 of the exhaust gas after-treatment device 20 through the flange pipe 16 connected to the turbocharger 15. Next, the exhaust gas supplied to the exhaust gas after-treatment device 20 via the exhaust gas inlet 21 is purified through a DOC and a DPF located in the exhaust gas after-treatment device 20 and finally discharged through the purified gas outlet 22 to the air.

On the other hand, the purification of the exhaust gas of the diesel engine is conducted generally for nitrogen oxides (NOₓ) and particulate matters (PM) (including smoke), and the materials are absorbed onto the DOC or DPF of the exhaust gas after-treatment device 20 and purified.

Especially, the DPF serves to catch the particulate matters discharged from the diesel engine therethrough, to burn them, and to catch the particulate matters again, so that the DPF can be used again. Accordingly, the DPF reduces the amount of exhaust gas emitted up to 80%, thus exerting excellent performance.

However, the exhaust gas after-treatment device having the DOC and the DPF coupled to each other becomes bulky and heavy, thus causing many inconveniences when mounted and used on the existing agricultural working vehicle.

Particularly, the exhaust gas after-treatment device requires more than a given exhaust temperature to remove the particulate matters with reliable combustion and to obtain sufficient catalyst activation, which undesirably causes structural limitations wherein the device should be mounted at the most adjacent position to the engine.

Accordingly, the exhaust gas after-treatment device is necessarily disposed within the engine room, but the existing engine room of the agricultural working vehicle is very small to cause many difficulties in providing the installation space thereof.

Further, since most of agricultural working vehicles mount high horsepower engines, driving vibrations are seriously generated, and in this case, if there is no fixing means for rigidly supporting the exhaust gas after-treatment device, the exhaust gas after-treatment device may be broken due to the vibration impacts or degraded in the purification performance. Furthermore, the exhaust gas after-treatment device may be escaped from the fixed position during the driving of the vehicle and may collide against surrounding structures, especially, the engine, thus causing severe failures and accidents.

### [Disclosure]

### [Technical Problem]

Accordingly, the present invention has been made in view of the above-mentioned problems occurring in the prior art, and it is an object of the present invention to provide a structure for detachably fixing an exhaust gas after-treatment device of an agricultural working vehicle that is configured wherein the exhaust gas after-treatment device purifying the exhaust gas generated from an engine is disposed over a flywheel housing of the engine in a direction perpendicular to the longitudinal direction of the engine and fixed at the same time to a cylinder block and the flywheel housing of the engine by means of a fixing member, so that if needed, the exhaust gas after-treatment device can be easily detached from the engine.

It is another object of the present invention to provide a structure for detachably fixing an exhaust gas after-treatment device of an agricultural working vehicle that is configured wherein the exhaust gas after-treatment device is fixed to the top portion of a flywheel housing at the rear side of an engine by means of a fixing member in a more compact manner, without having any machining of an engine casing or changing the structure of the exiting engine room, thus improving the space utilization of the engine room.

It is yet another object of the present invention to provide a structure for detachably fixing an exhaust gas after-treatment device of an agricultural working vehicle that is configured wherein the exhaust gas after-treatment device is fixed to a cylinder block and the top end of a flywheel housing by means of a fixing member in simple and rigid manners, thus stably suppressing the exhaust gas after-treatment device from sagging due to the vibration impacts caused by the driving of an engine and stably maintaining the performance of the exhaust gas after-treatment device.

### [Technical Solution]

To accomplish the above-mentioned objects, according to the present invention, there is provided a structure for detachably fixing an exhaust gas after-treatment device purifying the exhaust gas generated from an engine in an agricultural working vehicle to the engine, the structure including a fixing member adapted to fix the exhaust gas after-treatment device to a cylinder block and a flywheel housing of the engine, at the same time, in the state where the exhaust gas after-treatment device is disposed over the flywheel housing of the engine in a direction perpendicular to the longitudinal direction of the engine.

According to the present invention, preferably, the fixing member includes a housing bracket coupled at the same time to the cylinder block and the flywheel housing and mounting brackets coupled facingly to the housing bracket to fixedly mount the exhaust gas after-treatment device thereon.

According to the present invention, preferably, the housing bracket has a first bent surface located in a front side direction of the engine in such a manner as to be bent and a pair of second bent surfaces located in a direction of both sides of the engine in such a manner as to be bent, so that in the state where the housing bracket is seated onto the top end of the flywheel housing, the first bent surface is fixed to the cylinder block by means of bolts, and the pair of second bent surfaces is fixed to both side surfaces of the flywheel housing by means of bolts.

According to the present invention, preferably, the mounting brackets are two independent structures bent to a shape of '¬' in such a manner as to be disposed to face both side surfaces of the housing bracket, so that one side end portions of the mounting brackets are fixedly fastened to both side surfaces of the flywheel housing by means of bolts in the state of facing the second bent surfaces of the housing bracket, and the other side end portions of the mounting brackets are fixedly fastened to the underside of the exhaust gas after-treatment device by means of bolts.

### [Advantageous Effects]

According to the present invention, the exhaust gas after-treatment device purifying the exhaust gas generated from the engine is disposed over the flywheel housing of the engine in the direction perpendicular to the longitudinal direction of the engine and fixed at the same time to the cylinder block and the flywheel housing of the engine by means of the fixing member, so that if needed, the exhaust gas after-treatment device can be easily detached from the engine.

Further, the exhaust gas after-treatment device is fixed to the top portion of the flywheel housing at the rear side of the engine by means of the fixing member in a more compact manner, without having any machining of an engine casing or changing the structure of the exiting engine room, thus improving the space utilization of the engine room.

Moreover, the exhaust gas after-treatment device is fixed to the cylinder block and the top end of the flywheel housing by means of the fixing member in simple and rigid manners, thus stably suppressing the exhaust gas after-treatment device from sagging due to the vibration impacts caused by the driving of the engine and stably maintaining the performance of the exhaust gas after-treatment device.

Further, the exhaust gas after-treatment device in the conventional practice is mounted directly on the cylinder block of the engine, but the exhaust gas after-treatment device according to the present invention is mounted on the top portion of the flywheel housing at the rear side of the engine, thus causing no change in the structural strength of the engine itself or in NVH (noise, vibration, and harshness) characteristics.

Furthermore, the exhaust gas after-treatment device emitting high heat is located on the top side of the flywheel housing at the rear side of the engine, thus preventing the engine from being exposedly close to the structure having high heat source and suppressing the performance of the engine from being degraded due to high heat.

### [Description of Drawings]

FIG.1 is a front view showing the internal configuration of an engine room to which a conventional exhaust gas after-treatment device of an agricultural working vehicle is fixed.
FIG.2 is a side view showing the interior of the engine room of FIG.1 seen at the rear side of the vehicle.
FIG.3 is a perspective view showing a structure for detachably fixing an exhaust gas after-treatment device of an agricultural working vehicle according to the present invention.
FIG.4 is a front view seen on the plane of Y-Z of FIG.3.
FIG.5 is a side view seen on the plane of X-Z of FIG.3.
FIG.6 is a detailed view showing the fixed state of the exhaust gas after-treatment device to a cylinder block through a housing bracket.
FIG.7 is a perspective view showing the structure of FIG.3 seen from the front side of an engine.

### [Mode for Invention]

Hereinafter, an explanation on a structure for detachably fixing an exhaust gas after-treatment device of an agricultural working vehicle according to the present invention will be in detail given with reference to the attached drawings.

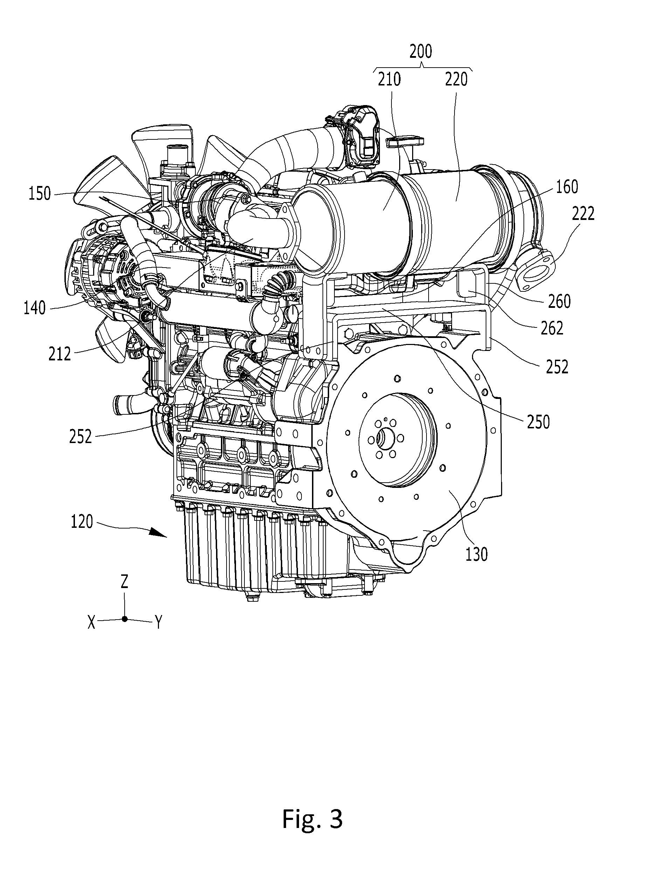

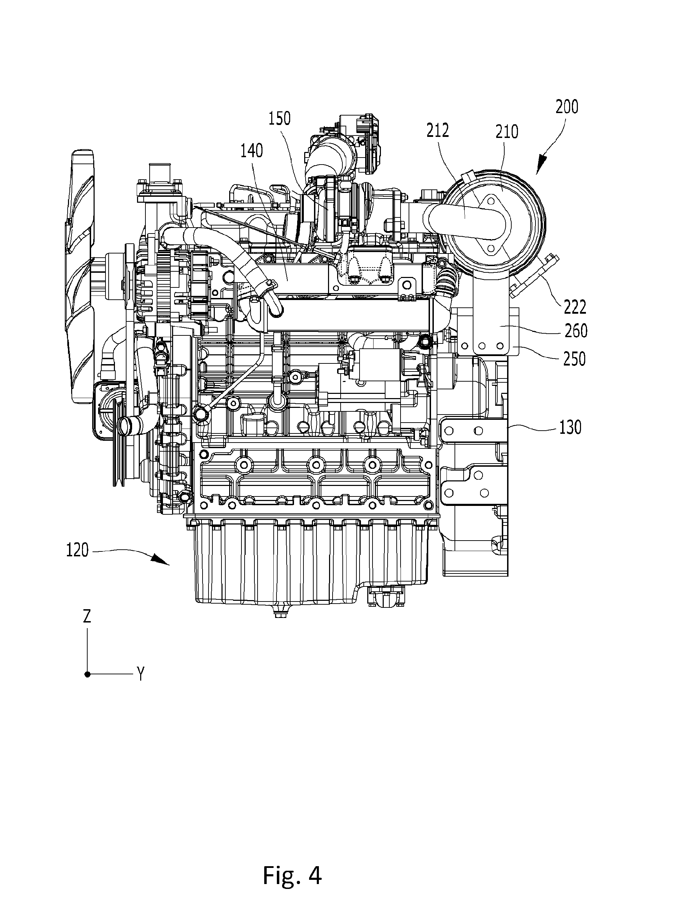

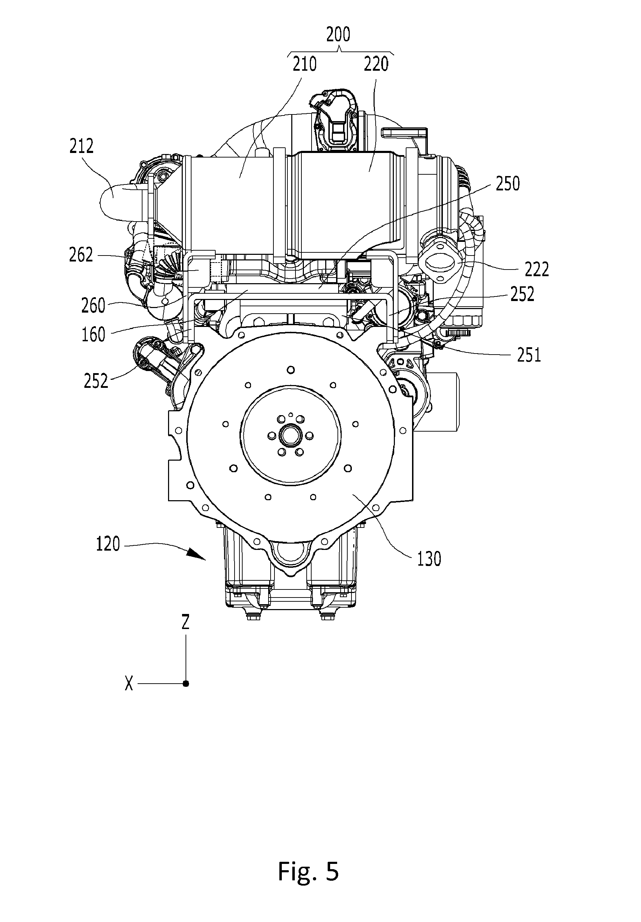

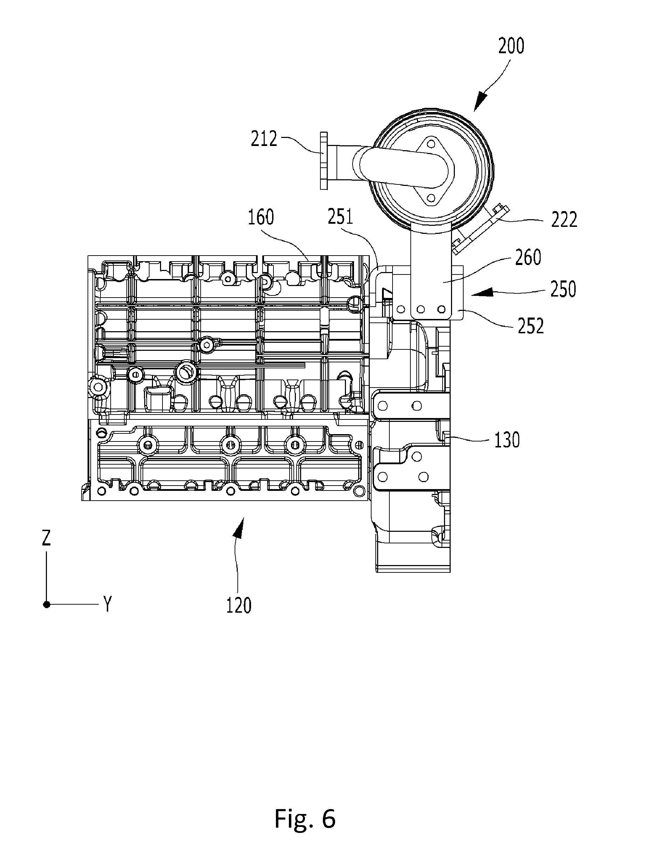

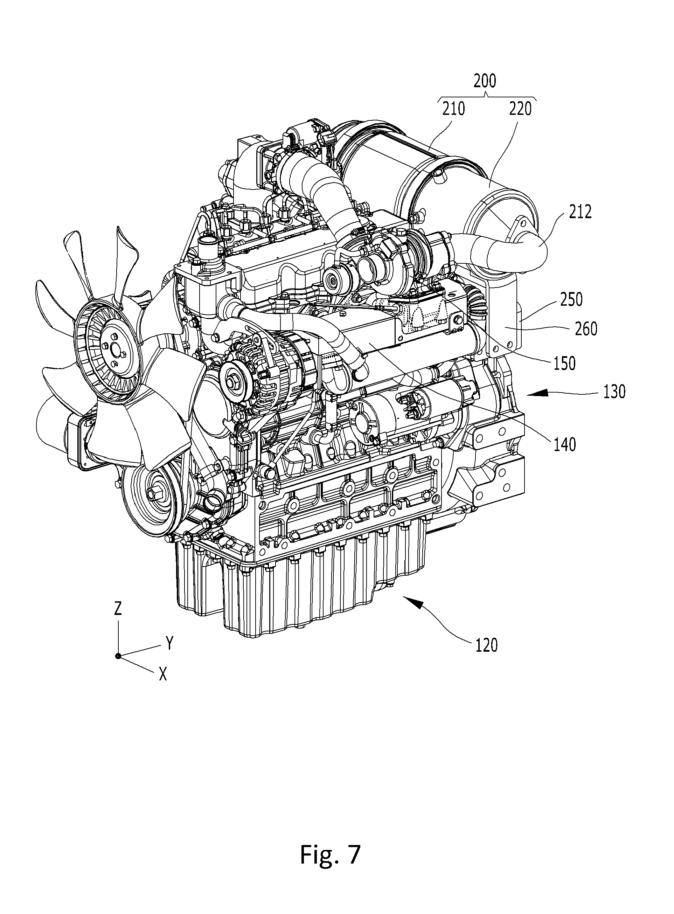

FIG.3 is a perspective view showing a structure for detachably fixing an exhaust gas after-treatment device of an agricultural working vehicle according to the present invention. FIG.4 is a front view seen on the plane of Y-Z of FIG.3, and FIG.5 is a side view seen on the plane of X-Z of FIG.3. FIG.6 is a detailed view showing the fixed state of the exhaust gas after-treatment device to a cylinder block through a housing bracket, and FIG.7 is a perspective view showing the structure of FIG.3 seen from the front side of an engine.

As shown in FIGS.3 to 7, an exhaust gas after-treatment device 200 according to the present invention is mounted in an engine room (not shown) of a tractor and includes a DOC 210 removing carbon monoxide CO and hydrocarbon HC contained in exhaust gas and a DPF 220 filtering particulate matters (various particulate hazardous matters including smoke) contained in exhaust gas.

In more detail, the exhaust gas after-treatment device 200 is disposed over a position spaced apart from a flywheel housing 130 of an engine 120 by a given distance in a direction (X-axis direction) perpendicular to the longitudinal direction (Y-axis direction) of the engine 120 and fixed at the same time to a cylinder block 160 and the flywheel housing 130 of the engine 120 by means of a fixing member.

The fixing member for fixing the exhaust gas after-treatment device 200 to the top portion of the flywheel housing 130 includes a housing bracket 250 coupled at the same time to the cylinder block 160 and the flywheel housing 130 and two mounting brackets 260 coupled facingly to the housing bracket 250 to fix the exhaust gas after-treatment device 200 thereto. Referring to FIG.4 showing the engine 120 seen from the front side of the vehicle, the left side becomes the front side of the engine 120, and the right side becomes the rear side of the engine 120.

At this time, the housing bracket 250 has a first bent surface 251 located in a front side direction (Y-axis direction) of the engine 120 in such a manner as to be bent downward and a pair of second bent surfaces 252 located in a direction (X-axis direction) of both sides of the engine 120 in such a manner as to be bent downward.

In the state where the housing bracket 250 is seated onto the top end of the flywheel housing 130, the first bent surface 251 located in the front side direction of the engine 120 is fixed to the wall surface of the cylinder block 160 by means of bolts and the pair of second bent surfaces 252 located in the direction of both sides of the engine 120 is fixed to both side surfaces of the flywheel housing 130 by means of bolts.

Further, the mounting brackets 260 are two independent structures bent to a shape of '¬', and the '¬' -shaped mounting brackets 260 are disposed to face both side surfaces of the housing bracket 250, that is, the outside surfaces of the pair of second bent surfaces 252.

One side end portions of the two mounting brackets 260 are fixedly fastened to both side surfaces of the flywheel housing 130 by means of bolts in the state of facing the outside surfaces of the second bent surfaces 252 of the housing bracket 250, and the other side end portions of the two mounting brackets 260 are fixedly fastened to the underside of the exhaust gas after-treatment device 200 by means of bolts.

At this time, the end portions of the two mounting brackets 260 supporting the underside of the exhaust gas after-treatment device 200 are desirably curved to the form of an arch capable of surroundingly support the cylindrical outer peripheral surface of the exhaust gas after-treatment device 200.

Further, the '¬' -shaped mounting brackets 260 include ribs 262 disposed at the inner side bent portions thereof to improve structural strengths.

Under the above-mentioned configuration, the exhaust gas after-treatment device 200 is fixedly supported against the top end portion of the flywheel housing 130 by means of the housing bracket 250 and the two mounting brackets 260 in a rigid manner.

On the other hand, the exhaust gas after-treatment device 200 has an exhaust gas inlet 212 formed on one side of the DOC 210, and the exhaust gas inlet 212 is detachably connected horizontally to a turbocharger 150 directly connected to an exhaust manifold 140 (which is a portion covered by a yellow cap) located therebelow.

Further, the exhaust gas after-treatment device 200 has a purified gas outlet 222 formed on one side of the DPF 220 to discharge the purified gas therethrough.

The turbocharger 150 rotates an internal turbine wheel by using the pressure of the exhaust gas discharged through the exhaust manifold 140 of the engine 120 and thus rotates a compressor wheel connected to the same shaft as the turbine wheel to allow the introduced air to be forcedly compressed and pushed into a combustion chamber, thus enhancing the output of the engine 120.

The turbocharger 150 is flange-coupled to the exhaust gas inlet 212 formed on the DOC 210 of the exhaust gas after-treatment device 200, and if needed, the turbocharger 150 may be connected to or separated from the exhaust gas inlet 212 through the coupled flange portions therebetween.

Accordingly, the portion of the exhaust gas after-treatment device 200 connected to the turbocharger 150 and the fixed portion of the exhaust gas after-treatment device 200 to the mounting brackets 260 are separated from the fixed states, so that the exhaust gas after-treatment device 200 can be easily detached from the engine 120.

Under the above-mentioned configuration, now, an explanation on the operating mechanism of the exhaust gas after-treatment device 200 will be given. The exhaust gas generated when the engine 120 is driven is introduced into the turbocharger 150 connected to the exhaust manifold 140, thus driving the turbocharger 150, and after that, the exhaust gas is introduced into the exhaust gas inlet 212 of the DOC 210 connected to the turbocharger 150 and supplied to the interior of the exhaust gas after-treatment device 200. Next, the exhaust gas supplied to the exhaust gas after-treatment device 200 is purified through the DOC 210 and the DPF 220 and finally discharged through the purified gas outlet 222 to the air.

As mentioned above, the exhaust gas after-treatment device 200 purifying the exhaust gas generated from the engine 120 is disposed over the flywheel housing 130 of the engine 120 in the direction perpendicular to the longitudinal direction of the engine 120 and fixed at the same time to the cylinder block 160 and the flywheel housing 130 of the engine 120 by means of the two brackets 250 and 260, so that if needed, the portion of the exhaust gas inlet 212 connected to the turbocharger 150 and the underside portion of the device 200 coupled to the mounting brackets 260 are separated, thus easily detachably mounting the exhaust gas after-treatment device 200 on the engine 120.

Further, the exhaust gas after-treatment device 200 is fixed to the top portion of the flywheel housing 130 at the rear side of the engine 120 by means of one housing bracket 250 and the two mounting bracket 260 in a more compact manner, without having any machining of an engine casing or changing the structure of the exiting engine room, thus improving the space utilization of the engine room.

Moreover, the exhaust gas after-treatment device 200 is fixed to the cylinder block 160 and the top end of the flywheel housing 130 by means of one housing bracket 250 and the two mounting bracket 260 in simple and rigid manners, thus stably suppressing the exhaust gas after-treatment device 200 from sagging due to the vibration impacts caused by the driving of the engine 120 and stably maintaining the performance of the exhaust gas after-treatment device 200.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A structure for detachably fixing an exhaust gas after-treatment device purifying the exhaust gas generated from an engine in an agricultural working vehicle to the engine, the structure comprising a fixing member adapted to fix the exhaust gas after-treatment device to a cylinder block and a flywheel housing of the engine, at the same time, in the state where the exhaust gas after-treatment device is disposed over the flywheel housing of the engine in a direction perpendicular to the longitudinal direction of the engine.

2. The structure according to claim 1, wherein the fixing member comprises a housing bracket coupled at the same time to the cylinder block and the flywheel housing and mounting brackets coupled facingly to the housing bracket to fixedly mount the exhaust gas after-treatment device thereon.

3. The structure according to claim 2, wherein the housing bracket has a first bent surface located in a front side direction of the engine in such a manner as to be bent and a pair of second bent surfaces located in a direction of both sides of the engine in such a manner as to be bent, so that in the state where the housing bracket is seated onto the top end of the flywheel housing, the first bent surface is fixed to the cylinder block by means of bolts, and the pair of second bent surfaces is fixed to both side surfaces of the flywheel housing by means of bolts.

4. The structure according to claim 3, wherein the mounting brackets are two independent structures bent to a shape of '¬' in such a manner as to be disposed to face both side surfaces of the housing bracket, so that one side end portions of the mounting brackets are fixedly fastened to both side surfaces of the flywheel housing by means of bolts in the state of facing the second bent surfaces of the housing bracket, and the other side end portions of the mounting brackets are fixedly fastened to the underside of the exhaust gas after-treatment device by means of bolts.
